# EUROPEAN PATENT SPECIFICATION

(11) **EP 1 593 050 B1**
(45) Date of publication and mention of the grant of the patent: **15.06.2011**
(21) Application number: 03815673.3
(22) Date of filing: 07.02.2003
(51) Int. Cl.: G06F 17/28, H04M 3/493

(54) **SYSTEM AND METHOD FOR PROCESSING A MESSAGE IN A SERVER OF A COMPUTER NETWORK SENT BY A MOBILE COMPUTER DEVICE**
SYSTEM UND VERFAHREN ZUR VERARBEITUNG EINER MITTELS MOBILEM COMPUTERGERÄT GESENDETEN NACHRICHT IN EINEM SERVER EINES COMPUTERNETZWERKES
SYSTEME ET PROCEDE DE TRAITEMENT D'UN MESSAGE DANS UN SERVEUR D'UN RESEAU INFORMATIQUE ENVOYE PAR UN DISPOSITIF INFORMATIQUE MOBILE

(43) Date of publication of application: 09.11.2005
(73) Proprietor: RESEARCH IN MOTION LIMITED, Waterloo, Ontario N2L 3W8 (CA)
(72) Inventor: BROWN, Michael, K., Peterborough, Ontario K9K 2E4 (CA); LITTLE, Herbert, A., Waterloo, Ontario N2T 2V8 (CA)
(74) Representative: Rickard, David John
(86) International application number: PCT/CA2003/000182
(87) International publication number: WO 2004/070622

(56) References cited:
- EP-A- 1 130 523
- WO-A-02/23389
- PATENT ABSTRACTS OF JAPAN vol. 2000, no. 26, 1 July 2002 (2002-07-01) & JP 2001 251429 A (NET TEIMENTO:KK;HAYASHI HIROTO), 14 September 2001 (2001-09-14)
- PATENT ABSTRACTS OF JAPAN vol. 2000, no. 13, 5 February 2001 (2001-02-05) & JP 2000 276431 A (NEC CORP), 6 October 2000 (2000-10-06)

## Description

### Field of the invention

This invention relates to mobile computer devices, and more specifically to the processing of messages displayed in such devices.

### Background of the invention

Mobile computer devices are widespread in present-day society, and include small, hand-held electronic devices such as personal data assistants (PDA's), personal information managers (PIM's), two-way pagers and the like. With the proliferation of such mobile computer devices, the demand for wireless access to computer networks using these devices has increased. For example, many hand-held electronic devices, such as the BlackBerry 6710 Wireless Handheld™ from Research in Motion, Inc., Waterloo, Ontario, are configured for wireless Internet access.

The portability of such electronic devices coupled with their ability to wirelessly access the global Internet has made international communication more extensive than ever. Along with the advantages inherent in such communication capabilities, problems have arisen associated with the exchange of information between disparate computer networks.

When a packet originating in a first network is sent to the mobile computer device via several other foreign networks, many problems can arise at the interfaces. Protocol and address conversions, and error, flow and congestion control are just some of the issues that must be addressed in the interface between different computer networks if communication is to occur. These interface issues occur at the computer level.

Paralleling these issues in mobile computer devices, which involve the exchange of information between different computer networks, is the exchange of information between humans who speak different languages. For example, an English speaking person carrying a mobile computer device may download a French Web page using wireless technology. Despite the impressive technology required to achieve such a download, if the English speaking person does not understand French, then communication breaks down at the human level.
JP2001/251429 discloses a portable telephone that can send a voice message to a translation center which translates a language of said message to another language and sends the translated voice message back to the portable telephone where the voice translation can be played. Alternatively, the translated voice message can be returned to the portable telephone in a text format.
EP1130523 discloses a translation system whereby a user of a client device can obtain a translation of a web page. A request for a translation of a web page is sent from the client device to a cache server. If the page has already been translated and the translation stored in the cache server then this translation is returned to the client device. If the page has not yet been translated, then the cache server forwards the client request to a translation server which performs the translation.
WO02/23389 discloses a mobile device to mobile device translation system whereby a first mobile device can send a sentence to be translated to a second mobile device. The second mobile device translates the sentence and returns the result to the first mobile device.
JP2000/276431 discloses a system in which a translating proxy cache server downloads an HTML document for providing a translation of a document on a browser. An HTML document analysis and translation object device analyzes the downloaded HTML document to extract a document to be translated. A machine translation device translates the extracted document and saves it as a translated HTML document in a server. The saved HTML document is then sent to the browser.

The description in this document relates to problems that arise when a user of a mobile computer device capable of wireless transmission receives text written in a foreign language. Program instructions in the mobile computer device allow the user to translate the foreign language text displayed by the device into a language that is understood by the user. The translation may be achieved by transmitting the text to a server on a computer network that translates the text. The at least one server may comprise a proxy and a processing server. In operation, a message including the text to be translated is sent first to the proxy for conversion into a new format compatible with the processing server. The reformatted message may then be sent to the processing server where the text is translated. The server may then send the translated text back to the mobile computer device. The translated text may be sent back to the mobile computer device via the proxy.

In one embodiment there may be provided a method of converting text displayed on a mobile computer device capable of wireless access to a computer network into an encrypted message, the method comprising: presenting a menu option to a user of the mobile computer device for converting the text into the encrypted message, wherein program instructions for presenting the menu option originate in the mobile computer device; after selection of an encryption option from the menu option, wirelessly sending the text to at least one server on the computer network for converting the text into the encrypted message, wherein the at least one server comprises a proxy and an encryption server, the text being sent first to the proxy, wherein the proxy server is configured to format the text into a hypertext markup language and send the formatted text to the encryption server and wherein the encryption server is configured to receive the formatted text in the hypertext markup language and convert the formatted text to the encrypted message; and the mobile computer device receiving the encrypted message from one of the proxy or the encryption server.

In another embodiment there may be provided a system for converting text displayed on a mobile computer device capable of wireless access to a computer network into an encrypted message, the system comprising: a menu option module in the mobile computer device that comprises program instructions for presenting a menu option including an encryption option to a user of the mobile computer device (8) for converting the text into the encrypted message; a transmitter for wirelessly sending text to at least one server on the computer network for converting the text into the encrypted message; and a receiver in the mobile computer device for receiving the encrypted message from one of a proxy or an encryption server; wherein the at least one server comprises the proxy and the encryption server, and wherein the proxy server is configured to format the text into a hypertext markup language and send the formatted text to the encryption server and wherein the encryption server is configured to receive the formatted text in the hypertext markup language and convert the formatted text to the encrypted message.

The system might comprise a translation menu option module in the mobile computer device. The module may contain program instructions for presenting a menu option to a user of the device for translating the text.

The reformatted message may be sent to the processing server where the text is translated. The server may then send a second representation of the translated text back to the mobile computer device. The system may further comprise a receiver in the mobile computer device for receiving the second representation of the translated text. The mobile computer device can then display the translated text.

[Additionally, a computer-readable medium is described herein having recorded thereon a program for execution by a processor in a mobile computer device capable of wireless access to a computer network for converting text displayed on the mobile computer device into an encrypted message, the program comprising instructions for causing the mobile computer device to implement the method described herein.

The program may serve to convert an initial message residing in the device into a processed message. In particular, the program may comprise instructions for presenting a menu option to a user of the device for converting the initial message into the processed message, and, after the user selects the menu option to convert, wirelessly sending a representation of the initial message to at least one server on the computer network for converting the representation of the initial message into the processed message. The at least one server may comprise a proxy and a processing server. In operation, a representation of the initial message may be sent first to the proxy for conversion into a new format compatible with the processing server. The reformatted message may then be sent to the processing server where the representation of the initial message is converted into the processed message. The program may also comprise instructions that allow the mobile computer device to receive a representation of the processed message from a particular one of the at least one server.

### Brief description of the drawings

For a better understanding of the present invention and to show more clearly how it may be carried into effect, reference will now be made, by way of example, to the accompanying drawings, in which:

Figure 1 shows a system for converting an initial message residing in a mobile computer device into a processed message, in accordance with the principles of the present invention;

Figure 2 shows menu options provided by the menu option module of the system of Figure 1;

Figure 3 shows a system for translating text that is displayed in a first language in a mobile computer device, in accordance with the principles of the present invention;

Figure 4 shows a pop-up having translation characteristic options, in accordance with the principles of the present invention; and

Figure 5 shows a flow chart for converting an initial message residing in a mobile computer device into a processed message, in accordance with the principles of the present invention.

### Detailed description of the invention

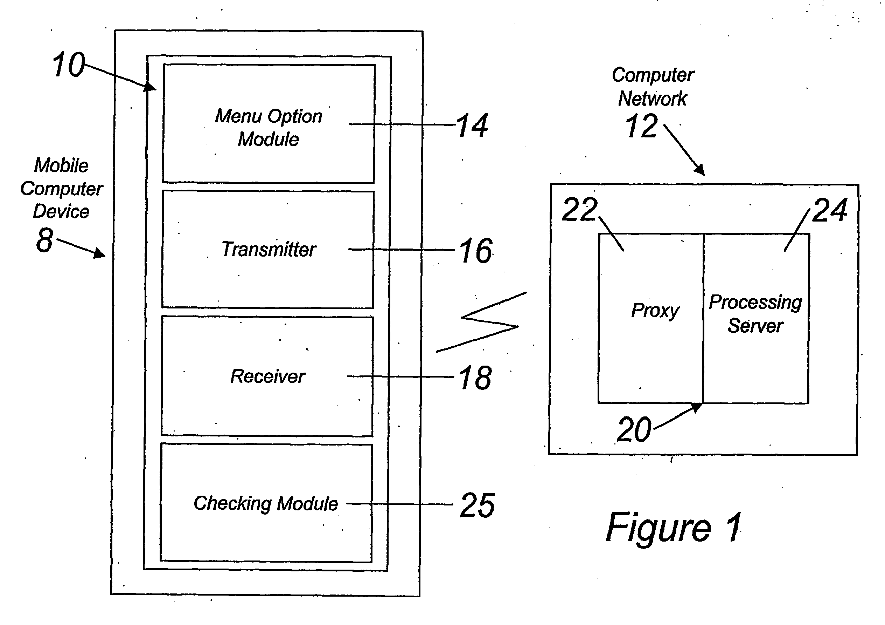

Figure 1 shows a system 10 for converting an initial message residing in a mobile computer device 8, such as text displayed by the device 8, into a processed message. The mobile computer device 8 is capable of wireless access to a computer network 12. The system 10 includes a menu option module 14, a transmitter 16 and a receiver 18.

The menu option module 14 in the mobile computer device 8 includes hardware and software for presenting a menu option to a user of the device for converting the initial message into the processed message. In particular, the menu option module 14 includes program instructions for presenting the menu option to the user.

The transmitter 16 wirelessly sends a representation of the initial message to at least one server 20 on the computer network 12. The at least one server 20 converts the representation of the initial message into the processed message. The receiver 18 in the mobile computer device 8 receives the processed message, or a representation thereof, from the at least one server 20.

For example, the initial message can be text in a first language. The mobile computer device 8 can transform the text into a representation suitable for wireless transmission. For example, the text (initial message) can be converted into a digital signal (representation of the original message) for wireless transmission. The at least one server 20 can translate the representation of the text into one translated into a second language. The at least one server 20 includes all the software and hardware required to receive the representation of the text, and to convert it to translated text (processed message), or a representation of the translated text (such as a digital signal suitable for wireless transmission).

In one embodiment, the at least one server 20 includes a proxy 22 and a processing server 24, the representation of the original message being sent first to the proxy 22 and then to the processing server 24. The proxy 22 converts the representation of the message into a new format, such as hypertext markup language (HTML), before sending the reformatted representation of the message to the processing server 24 for further processing. The processing server 24 can be a translation server, such as Babelfish™, an encryption server, such as one that provides Pretty Good Privacy (PGP) encryption, and/or a spell check/thesaurus server, such as that found at http://dictionary.reference.com/ (an alias for www.websters.com).

Instead or in addition, the representation of the processed message can be received by the receiver 18 via the proxy 22 in the computer network 12. In such case, the proxy 22 converts the processed message from the processing server 24 into a device-formatted representation of the processed message before sending to the receiver 18.

The use of a proxy 22 frees up processor time in the mobile computer device 8 by outsourcing to the proxy 22 tasks such as converting to HTML before sending to the processing server 24, and/or converting to mobile computer device format prior to sending to the receiver 18.

The initial message can be text displayed on the mobile computer device 8 in a first language. The text can form part of an email or a Web page. The system 10 can include a checking module 25 for automatically checking to determine whether the initial message corresponds to text in a language that is not native to a user of the mobile computer device. If the checking module 25 determines that the text is in a non-native language, the checking module 25 can automatically prompt the user to determine if the user wishes the text to be translated.

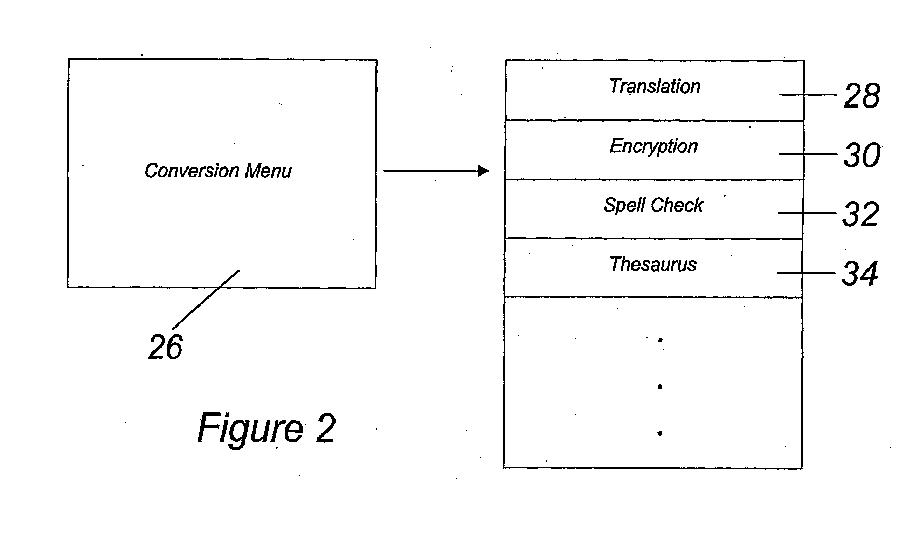

Figure 2 shows menu options provided by the menu option module 14. When the user selects the conversion menu 26, several menu options are displayed to the user. The menu option can include a translation option 28, an encryption option 30, a spell check option 32 or a thesaurus option 34. Selecting the translation option 28 can cause a pop-up (not shown in Fig. 2) to be displayed. The pop-up prompts a user of the mobile computer device 8 to choose at least one translation characteristic option, as described in more detail below.

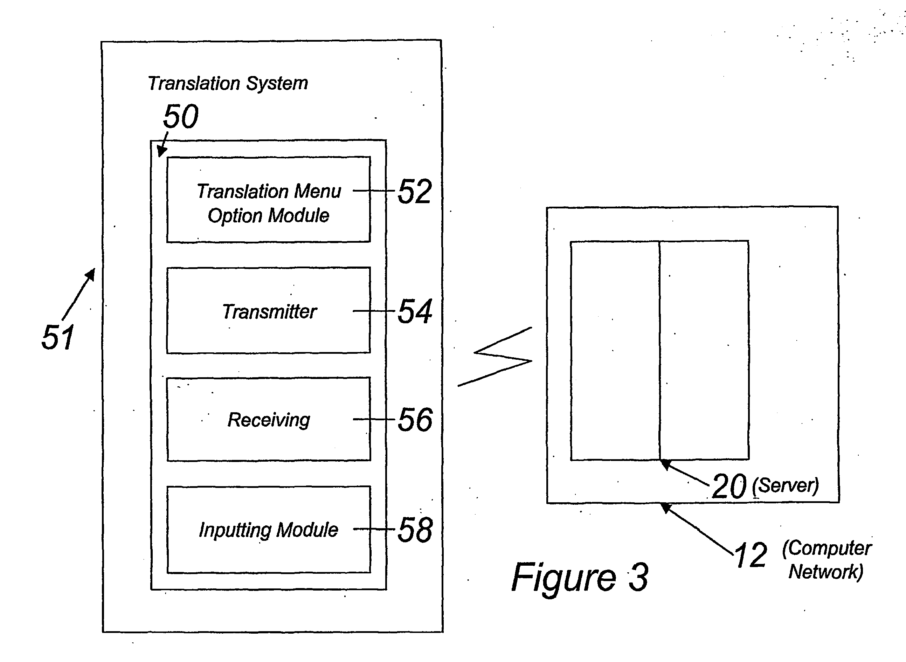

Figure 3 shows a translation system 50 for translating text that is displayed in a first language in a mobile computer device 51 consistent with the principles of the present invention. The mobile computer device 51 is capable of wireless access to a computer network 12, such as the Internet. The system 50 includes a translation menu option module 52, a transmitter 54 and a receiver 56.

The translation menu option module 52 has program instructions for presenting a menu option to a user of the device for translating the text. The transmitter 54 wirelessly sends a representation of the text to at least one server 20 on the computer network 12 to translate the representation of the text into a second language. A receiver 56 receives a second representation of the translated text.

The user can highlight the text to be translated. An inputting module 58 allows the user to issue a command to translate the highlighted text. For example, the inputting module 58 can include the thumb-operated trackwheel found in the aforementioned BlackBerry 6710 Wireless Handheld™. The trackwheel allows the user to highlight text and issue commands for translating. The translation menu option module 52 can input the request to translate and output a pop-up having one or more translation characteristic options.

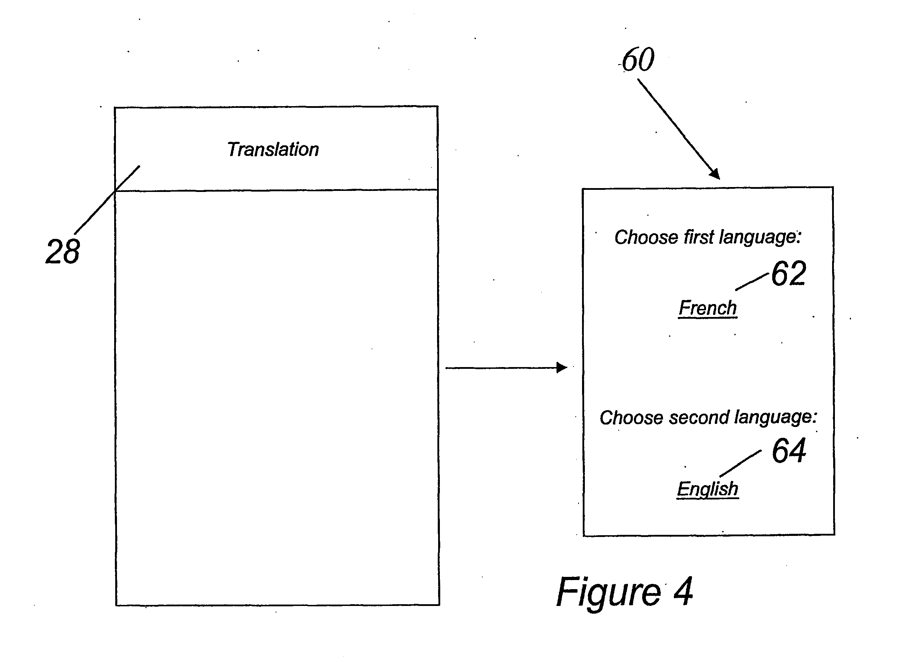

Figure 4 shows a pop-up 60 having translation characteristic options. The pop-up 60 can be displayed to the user after the user chooses the translation option 28 in the conversion menu 26. The translation characteristic options can include a first language option 62 to choose the first language in which the original textual message is written, and a second language option 64 to choose the second language into which the textual processed message is to be displayed on the mobile computer device 8. The highlighted text can be part of an email or Web page.

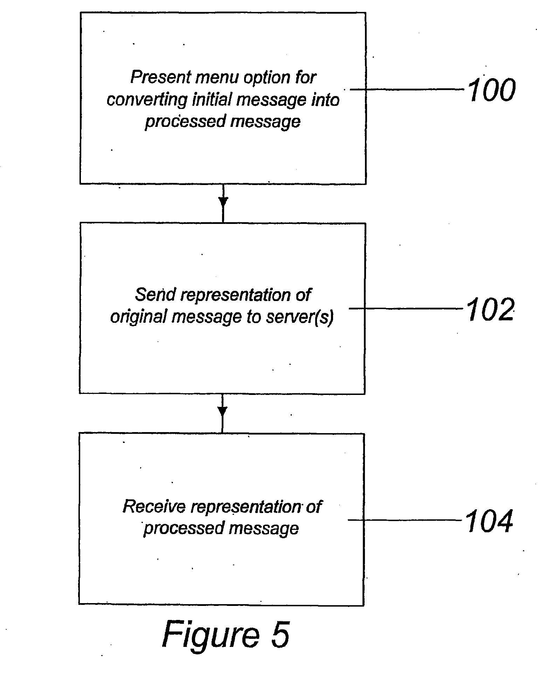

Figure 5 shows a flowchart for converting an initial message residing in a mobile computer device capable of wireless access to a computer network into a processed message. In step 100, a menu option is presented to a user of the device for converting the initial message into the processed message. Program instructions for presenting the menu option originate in the mobile computer device. After the user selects the menu option to convert, in step 102, a representation of the initial message is wirelessly sent to at least one server on the computer network for converting the representation of the initial message into the processed message. In step 104, the mobile computer device receives a representation of the processed message from a particular one of the at least one server.

It should be understood that various modifications could be made to the embodiments described and illustrated herein, without departing from the present invention, the scope of which is defined in the appended claims. Although emphasis has been placed on translating text from one language to another, other forms of data processing fall within the scope of the invention. For example, mention has been made of encryption, spell check and thesaurus processing. Other examples include sorting, grammar checking, and format conversion. The initial messages processed can include data files of various sorts and need not be only files associated with text.

## Claims

1. A method of converting text displayed on a mobile computer device (8) capable of wireless access to a computer network (12) into an encrypted message, the method comprising:
presenting (100) a menu option (28, 30, 32, 34) to a user of the mobile computer device (8) for converting the text into the encrypted message, wherein program instructions for presenting the menu option originate in the mobile computer device (8);
after selection of an encryption option (30) from the menu option (28, 30, 32, 34), wirelessly sending (102) the text to at least one server (20) on the computer network (12) for converting the text into the encrypted message, wherein the at least one server (20) comprises a proxy (22) and an encryption server (24), the text being sent first to the proxy (22), wherein the proxy server is configured to format the text into a hypertext markup language and send the formatted text to the encryption server and wherein the encryption server is configured to receive the formatted text in the hypertext markup language and convert the formatted text to the encrypted message; and
the mobile computer device (8) receiving (104) the encrypted message from one of the proxy (22) or the encryption server (24).

2. The method of claim 1, wherein, in the step of receiving (104), the encrypted message is received by the mobile computer device (8) via the proxy (22) in the computer network (12).

3. The method of claim 1 or claim 2, wherein the text forms part of an email.

4. The method of claim 1 or claim 2, wherein the text is in a Web page.

5. The method of claim 3 or claim 4, wherein the text comprises a highlighted part of text of an email or a Web page displayed on the mobile computer device (8).

6. A system for converting text displayed on a mobile computer device (8) capable of wireless access to a computer network (12) into an encrypted message, the system comprising:
a menu option module (14) in the mobile computer device (8) that comprises program instructions for presenting a menu option (28, 30, 32, 34) including an encryption option (30) to a user of the mobile computer device (8) for converting the text into the encrypted message;
a transmitter (16) for wirelessly sending text to at least one server (20) on the computer network (12) for converting the text into the encrypted message; and
a receiver (18) in the mobile computer device (8) for receiving the encrypted message from one of a proxy (22) or an encryption server (24);
wherein the at least one server (20) comprises the proxy (22) and the encryption server (24), and wherein the proxy server is configured to format the text into a hypertext markup language and send the formatted text to the encryption server and wherein the encryption server is configured to receive the formatted text in the hypertext markup language and convert the formatted text to the encrypted message.

7. The system of claim 6, wherein the receiver (18) is arranged to receive the encrypted message via the proxy (22) in the computer network (12).

8. The system of claim 6 or claim 7, wherein the text is part of an email.

9. The system of claim 6 or claim 7, wherein the text is part of a Web page.

10. The system of claim 8 or claim 9, wherein the text comprises a highlighted part of text of an email or a Web page displayed on the mobile computer device (8).

11. A computer-readable medium having recorded thereon a program for execution by a processor in a mobile computer device (8) capable of wireless access to a computer network (12) for converting text displayed on the mobile computer device (8) into an encrypted message, the program comprising instructions for causing the mobile computer device (8) to implement the method of any one of claims 1 to 5.

## Patentansprüche

1. Verfahren zum Umwandeln von Text, der auf einem mobilen Computergerät (8) angezeigt wird, das auf drahtlosem Wege auf ein Computernetzwerk (12) zugreifen kann, in eine verschlüsselte Nachricht, wobei das Verfahren Folgendes umfasst:
Präsentieren (100) einer Menüoption (28, 30, 32, 34) für einen Benutzer des mobilen Computergeräts (8) zum Umwandeln des Texts in die verschlüsselte Nachricht, wobei Programmanweisungen zum Präsentieren der Menüoption aus dem mobilen Computergerät (8) stammen,
nach der Wahl einer Verschlüsselungsoption (30) aus der Menüoption (28, 30, 32, 34): auf drahtlosem Wege erfolgendes Senden (102) des Textes zu mindestens einem Server (20) im Computernetzwerk (12) zum Umwandeln des Textes in die verschlüsselte Nachricht, wobei der mindestens eine Server (20) einen Proxy-Server (22) und einen Verschlüsselungsserver (24) umfasst und der Text zuerst zum Proxy-Server (22) gesendet wird, wobei der Proxy-Server so konfiguriert ist, dass er den Text in eine Hypertext-Auszeichnungssprache (HTML - Hypertext Markup Language) formatiert und den formatierten Text zum Verschlüsselungsserver sendet, und wobei der Verschlüsselungsserver so konfiguriert ist, dass er den formatierten Text in der Hypertext-Auszeichnungssprache empfängt und ihn in die verschlüsselte Nachricht umwandelt, und
Empfangen (104) der verschlüssselten Nachricht vom Proxy-Server (22) oder vom Verschlüsselungsserver (24) durch das mobile Computergerät (8).

2. Verfahren nach Anspruch 1, bei dem die verschlüsselte Nachricht beim Empfangen (104) von dem mobilen Computergerät (8) über den Proxy-Server (22) in dem Computernetzwerk (12) empfangen wird.

3. Verfahren nach Anspruch 1 oder 2, bei dem der Text Bestandteil einer E-Mail ist.

4. Verfahren nach Anspruch 1 oder 2, bei dem sich der Text in einer Webseite befindet.

5. Verfahren nach Anspruch 3 oder 4, bei dem der Text einen markierten Textteil einer E-Mail oder einer Webseite umfasst, die auf dem mobilen Computergerät (8) angezeigt wird.

6. System zum Umwandeln von Text, der auf einem mobilen Computergerät (8) angezeigt wird, das auf drahtlosem Wege auf ein Computernetzwerk (12) zugreifen kann, in eine verschlüsselte Nachricht, wobei das System Folgendes umfasst:
ein Menüoptionsmodul (14) in dem mobilen Computergerät (8), das Programmanweisungen zum Präsentieren (100) einer Menüoption (28, 30, 32, 34) einschließlich einer Verschlüsselungsoption (30) für einen Benutzer des mobilen Computergeräts (8) zum Umwandeln des Texts in die verschlüsselte Nachricht umfasst,
einen Sender (16) zum auf drahtlosem Wege erfolgenden Senden von Text zu mindestens einem Server (20) im Computernetzwerk (12) zum Umwandeln des Textes in die verschlüsselte Nachricht und
einen Empfänger (18) in dem mobilen Computergerät (8) zum Empfangen der verschlüssselten Nachricht von einem Proxy-Server (22) oder einem Verschlüsselungsserver (24),
wobei der mindestens eine Server (20) den Proxy-Server (22) und den Verschlüsselungsserver (24) umfasst und wobei der Proxy-Server so konfiguriert ist, dass er den Text in eine Hypertext-Auszeichnungssprache formatiert und den formatierten Text zum Verschlüsselungsserver sendet, und
wobei der Verschlüsselungsserver so konfiguriert ist, dass er den formatierten Text in der Hypertext-Auszeichnungssprache empfängt und ihn in die verschlüsselte Nachricht umwandelt.

7. System nach Anspruch 6, bei dem der Empfänger (18) so angeordnet ist, dass er die verschlüsselte Nachricht über den Proxy-Server (22) in dem Computernetzwerk (12) empfängt.

8. System nach Anspruch 6 oder 7, bei dem der Text Bestandteil einer E-Mail ist.

9. System nach Anspruch 6 oder 7, bei dem der Text Bestandteil einer Webseite ist.

10. System nach Anspruch 8 oder 9, bei dem der Text einen markierten Textteil einer E-Mail oder einer Webseite umfasst, die auf dem mobilen Computergerät (8) angezeigt wird.

11. Computerlesbares Medium, auf dem ein Programm aufgezeichnet ist, das von einem Prozessor in einem mobilen Computergerät (8) ausgeführt werden soll, welches zum Umwandeln von auf dem mobilen Computergerät (8) angezeigtem Text in eine verschlüsselte Nachricht auf drahtlosem Wege auf ein Computernetzwerk (12) zugreifen kann, wobei das Programm Anweisungen umfasst, die das mobile Computergerät (8) dazu veranlassen, das Verfahren nach einem der Ansprüche 1 bis 5 zu implementieren.

## Revendications

1. Une méthode de conversion de texte affiché sur un ordinateur portable (8) pouvant accéder sans fil à un réseau d'ordinateurs (12) dans un message chiffré, cette méthode comprenant :
la présentation (100) d'une option de menu (28, 30, 32, 34) à un utilisateur de l'ordinateur portable (8) pour la conversion du texte en message chiffré, dans laquelle les instructions du programme pour la présentation de l'option de menu émanent de l'ordinateur portable (8) ;
après la sélection d'une option de chiffrement (30) avec l'option de menu (28, 30, 32, 34), la transmission sans fil (102) du texte au minimum à un serveur (20) du réseau d'ordinateurs (12) pour la conversion du texte en message chiffré, dans laquelle au minimum ce serveur (20) comprend un serveur proxy (22) et un serveur de chiffrement (24), le texte étant transmis en premier lieu au serveur proxy (22), ce dernier étant configuré pour formater le texte dans un langage de balisage en hypertexte et transmettre le texte formaté au serveur de chiffrement, et ce dernier étant configuré pour recevoir le texte formaté dans le langage de balisage en hypertexte et convertir le texte formaté dans le message chiffré ; et
l'ordinateur portable (8) recevant (104) le message chiffré soit du serveur proxy (22) soit du serveur de chiffrement (24).

2. La méthode conforme à la revendication 1, dans laquelle, dans le cadre de l'opération de réception (104), le message chiffré est reçu par l'ordinateur portable (8) à travers le serveur proxy (22) dans le réseau d'ordinateurs (12).

3. La méthode conforme à la revendication 1 ou à la revendication 2, dans laquelle le texte fait partie d'un e-mail.

4. La méthode conforme à la revendication 1 ou à la revendication 2, dans laquelle le texte se trouve dans une page Web.

5. La méthode conforme à la revendication 3 ou à la revendication 4, dans laquelle le texte comprend une partie mise en évidence du texte d'un e-mail ou d'une page Web affichée sur l'ordinateur portable (8).

6. Un système assurant la conversion d'un texte affiché sur un ordinateur portable (8) en mesure d'accéder à un réseau d'ordinateurs (12), dans un message chiffré, le système comprenant :
un module d'option à menu (14) dans l'ordinateur portable (8) comprenant des instructions de programme pour la présentation d'une option de menu (28, 30, 32, 34), y copris une option de chiffrement (30) à un utilisateur de l'ordinateur portable (8) pour la conversion du texte dans le message chiffré ;
un transmetteur (16) assurant la transmission sans fil de texte au minimum à un serveur (20) du réseau d'ordinateurs (12) pour la conversion du texte dans le message chiffré ; et
un récepteur (18) dans l'ordinateur portable (8) assurant la réception du message chiffré soit d'un serveur proxy (22) soit d'un serveur de chiffrement (24).
dans lequel le serveur (20) comprend le serveur proxy (22) et le serveur de chiffrement (24), le serveur proxy est configuré pour formater le texte dans un langage de balisage en hypertexte et transmettre le texte formaté au serveur de chiffrement, et le serveur de chiffrement étant configuré pour recevoir le texte formaté dans le langage de balisage en hypertexte et convertir le texte formaté dans le message chiffré.

7. Le système conforme à la revendication 6, dans lequel le récepteur (18) est configuré pour recevoir le message chiffré, à travers le serveur proxy (22), dans le réseau d'ordinateurs (12).

8. Le système conforme à la revendication 6 ou à la revendication 7, dans lequel le texte fait partie d'un e-mail.

9. Le système conforme à la revendication 6 ou à la revendication 7, dans lequel le texte fait partie d'une page Web.

10. Le système conforme à la revendication 8 ou à la revendication 9, dans lequel le texte comprend une partie mise en évidence du texte d'un e-mail ou d'une page Web affiché sur l'ordinateur portable (8).

11. Un support assimilable par ordinateur sur lequel est enregistré un programme exécutable par un processeur dans un ordinateur portable (8) capable d'accéder sans fil à un réseau d'ordinateurs (12) pour assurer la conversion du texte affiché sur l'ordinateur portable (8) en un message chiffré, ce programme comprenant des instructions permettant à l'ordinateur portable (8) d'implémenter la méthode décrite dans une quelconque des revendications 1 à 5.
